(19)
**Europäisches Patentamt**
**European Patent Office**
**Office européen des brevets**

(11) **EP 1 607 217 B1**

(12) **EUROPÄISCHE PATENTSCHRIFT**

(45) Veröffentlichungstag und Bekanntmachung des Hinweises auf die Patenterteilung:
**19.11.2008 Patentblatt 2008/47**

(51) Int Cl.:
**B32B 27/32** *(2006.01)*  **E04B 1/80** *(2006.01)*

(21) Anmeldenummer: **05012728.1**

(22) Anmeldetag: **14.06.2005**

(54) **Folienlaminat mit wenigstens einer Diffusionssperrschicht und deren Verwendung bei Vakuumisolationspaneelen im Baubereich**

Multilayered foil with at least one diffusion barrier layer and its use for vacuum insulation panels in the construction industry

Feuille composite ayant une couche barrière de diffusion et son utilisation pour panneaux à isolation sous vide destinés au batiment

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.06.2004 DE 102004028756**

(43) Veröffentlichungstag der Anmeldung:
**21.12.2005 Patentblatt 2005/51**

(73) Patentinhaber: **Wipak Walsrode GmbH & Co. KG**
**29699 Bornlitz (DE)**

(72) Erfinder:
• **Kaczmarek, Dirk Dr.**
**28832 Achim (DE)**

• **Jacobsen, Sven Dr.**
**29683 Bad Fallingbostel (DE)**

(74) Vertreter: **Läufer, Martina et al**
**Gramm, Lins & Partner GbR**
**Freundallee 13**
**30173 Hannover (DE)**

(56) Entgegenhaltungen:
**DE-A1- 10 025 305**  **DE-A1- 10 025 321**
**DE-A1- 10 047 043**  **US-A- 4 592 941**

**Beschreibung**

Die Erfindung betrifft ein Folienlaminat mit wenigstens einer Diffusionssperrschicht für die Herstellung eines im Baubereich einsetzbaren Vakuumisolationspaneels.

Folienlaminate oder -verbunde mit Diffusionssperrschichten werden für verschiedene Zwecke verwendet. Sogenannte Hochbarrierefolien mit besonders großer Gasdiffusionsdichte werden unter anderem für die Herstellung von Vakuumisolationspaneelen benötigt.

Unter Vakuumisolationspaneelen versteht man plattenförmige Elemente, bei denen Dämmstoffe beziehungsweise inerte Füllstoffe vollständig umhüllt werden und die möglichst gasdichte Hülle dann weitestgehend evakuiert wird. Sehr kleine Gasdiffusionswerte des Hüllenmaterials sind erforderlich, damit das einmal angelegte Vakuum möglichst lange (es werden wenigstens 10 bis 15 Jahre angestrebt) erhalten bleibt.

Die Höhe des Vakuums ist von dem verwendeten Dämm- oder Füllstoff und der erwarteten Isolationswirkung des Paneels abhängig. Ebenso richtet sich die erwartete Gasdichtigkeit der Umhüllung nach dem Verwendungszweck. Bei Vakuumisolationspaneelen (VIPs), die in nicht allzu langlebigen Gebrauchsgütern, wie Camping-Kühlschränken, Kühlboxen und dergleichen eingesetzt werden sollen, sind die Ansprüche geringer als bei einem für den Baubereich vorgesehenen Paneel, das das Vakuum so lange wie möglich halten sollte, um bezogen auf die Lebensdauer eines Hauses nicht ausgetauscht werden zu müssen.

Für das Umhüllungsmaterial von VIPs wurden zunächst Aluminiumfolien verwendet, die sehr gasdicht sind. Die metallische Umhüllung besaß jedoch den Nachteil, dass Wärmebrücken an den Paneelkanten vorhanden waren, die die Isolationswirkung insgesamt verminderten.

Heute werden für Vakuumisolationspaneele (VIP) sogenannte Hochbarrierefolien eingesetzt, die häufig aus Folienlaminaten mit drei bis fünf Schichten bestehen, wobei in der Regel einzelne, vorwiegend innen liegende Schichten metallisiert sind, d.h. mit einem Metall wie Aluminium bedampft, oder mit einer hochgasdiffusionsdichten Beschichtung z.B. aus Siliziumoxid ($SiO_x$) oder Metalloxiden der 2. oder 3. Hauptgruppe des periodischen Systems versehen sind. Als Metalloxide für die Beschichtung bzw. Bedampfung kommen hier in erster Linie Magnesiumoxid, Aluminiumoxid, Calziumoxid, und Berylliumoxid in Frage.

Folienlaminate mit hoher Gassperrwirkung sind beispielsweise aus der DE 100 25 305 A1, der DE 100 25 321 A1 oder der DE 100 47 043 A1 bekannt. Die darin beschriebenen Hochbarriereschichten besitzen zwar sehr gute Gasdichtigkeiten und können das Vakuum in VIPs lange halten, sie sind jedoch für den Einsatz im Baubereich nicht geeignet, da sie den Brandschutzvorschriften nicht entsprechen.

Folien, die Brandschutzmittel enthalten, sind ebenfalls bekannt, allerdings nicht für die Verwendung an Vakuumisolationspaneelen die besondere Anforderungen stellen. Die US 4 592 941 beschreibt eine 3-schichtige Verpackungsfolie mit einer LLDPE/HDPE/Synthesekautschuk Kernschicht, der ein Flammschutzmittel zugesetzt sein kann.

Paneele, die am Bau eingesetzt werden, müssen mindestens den Anforderungen der Baustoffklasse B2 genügen. Die Prüfung, ob Baustoffe dieser Klasse gerecht werden, ist in DIN 4102-1 geregelt. Aufgrund der für die Anwendung gewollten geringen Wärmeleitfähigkeit des Paneel-Füllmaterials, verbunden mit der ebenfalls die Wärmeausbreitung verhindernden Evakuierung, wird die Wärme von einem Brandherd aus nicht genügend abgeleitet und es kommt zu starken lokalen Überhitzungen mit hoher Brandgefahr.

Grundsätzlich ist in Kunststoffen die Verwendung von Brand- oder Flammschutzmitteln bekannt, so werden beispielsweise PVC-Fenster, -Bodenbeläge und verschiedene Verpackungsmaterialien mit Flammschutzmitteln ausgerüstet.

Soweit von den Herstellern derartiger Folien zu erfahren, würden Flammschutzmittel enthaltende Polyethylenfolien für sich genommen sogar den Brandschutzvorschriften für Klasse B1 genügen. Dies gilt jedoch, wie die Anmelderin feststellen konnte nicht, wenn diese Folien sich als Umhüllung auf einem Isolationsmaterial befinden, was auf die oben beschriebene lokale Überhitzung zurückzuführen ist. Es besteht daher ein dringender Bedarf an hochgasdichten Folien für den Baubereich.

Der Erfindung liegt daher die Aufgabe zugrunde, eine Hochbarrierefolie so auszubilden, dass ein damit gefertigtes Vakuumisolationspaneel den bautechnischen Vorschriften nach DIN 4102-1 und den Flammschutz-Anforderungen der Baustoffklasse B2 genügt.

Zur Lösung dieser Aufgabe ist erfindungsgemäß ein Folienlaminat mit wenigstens einer Diffusionssperrschicht vorgesehen, das an wenigstens einer Oberfläche eine ein- oder mehrschichtige Siegelfolie besitzt, die innerhalb einer außenliegenden Einzelfolie oder innerhalb eines coextrudierten, wenigstens außenliegend eine Polyolefinschicht enthaltenden Verbundes mit einer wirksamen Menge eines Flammschutzmittels oder einer Mischung aus Flammschutzmitteln versehen ist.

Überraschenderweise wurde nämlich gefunden, dass ein mit einer solchen Folie hergestelltes Vakuumisolationspaneel, das neben wenigstens einer, vorzugsweise mehreren Diffusionssperrschichten wenigstens an der außenliegenden Folienoberfläche eine Polyolefin-Heißsiegelschicht mit einem Flammschutzmittel besitzt, bereits den Brandvorschriften genügt und im Baubereich eingesetzt werden kann. Das Flammschutzmittel innerhalb der äußeren Siegelschicht hemmt ein Entflammen hinreichend. Die an der Schwelstelle gegebenenfalls freigelegte oder einem Wärmekontakt zugänglich gemachte Metallisierung verteilt zusätzlich Wärme über die Oberfläche, so dass die Brandgefahr deutlich herabgesetzt wird.

Trotz des zugesetzten Flammschutzmittels verbinden sich die Siegelschichten bei der Herstellung eines Vakuumisolationspaneels mit der erfindungsgemäßen Folie gut und beeinträchtigen die Vakuumdichtigkeit nicht. Wasserdampf- und Gasdichtigkeit bleiben erhalten.

Wenn für die Herstellung des Paneels eine beidseitig siegelbare Hochbarrierefolie eingesetzt werden soll, kann das Brandschutzmittel bzw. Flammschutzmittel in oder an beiden außenliegenden Siegelschichten vorgesehen sein. Wird das Brandschutzmittel nur einseitig eingebracht, wäre diese Seite zweckmäßigerweise als Außenseite zu kennzeichnen, beispielsweise durch Bedrucken oder Einfärben.

Die Art der polyolefinischen Siegelschicht unterliegt keinen besonderen Einschränkungen. Es können alle dem Fachmann für den Zweck des Heißsiegelns bekannten und geeigneten Heißsiegelschichten verwendet werden. Derzeit bevorzugt wird eine Polyethylen-Heißsiegelschicht. Allgemein können Polyolefin Homo- oder Copolymere eingesetzt werden. Bevorzugt sind Linear Low Density Polyethylen (LLDPE), Polybutylen (PB), Ethylenvinylacetat (EVA), Polypropylen (PP), High Density Polyethylen (HDPE), Ionomere (IO) und Mischungen dieser Stoffe. Die Dicke der bei der Erfindung verwendeten Siegelschichten beträgt zwischen 20 und 100 $\mu$m, vorzugsweise 30 bis 60 $\mu$m.

Als Flammschutzmittel wird in einer bevorzugten Ausführungsform Antimontrioxid ($SbO_3$) einzeln oder in Kombination mit halogenorganischen Verbindungen verwendet. Generell können als Flammschutzmittel dem Fachmann bekannte und für die Verwendung in Kunststoffen geeignete Flammschutzmittel zugesetzt sein. Bevorzugt werden Flammschutzmittel aus der folgenden Gruppe einzeln oder in Kombination eingesetzt:

Antimontrioxid, Borate, insbesondere Alkaliborate, Zinkborate, Borax-Dekahydrat, Borax-Pentahydrat und/oder Melaminborat, Ammoniumphosphate, Alkalisilikate, Aluminiumoxidhydrate, Aluminiumtrihydrat, halogenierte oragnische Verbindungen, insbesondere Chlorparaffine, Hexabrombenzol, polybromierte Diphenylether (PBDE), polybromierte Biphenyle (PBB), Tetrabrombisphenol-A (TBBA), tetrabromphthalsäureanhydrid, Dibromneopentylglykol, Tris-(2,3-dibrompropyl)-phosphat (TRIS-BP) und/oder Tris-(2-brom-4-methyl-phenyl)-phosphat, Organophosphate, -phosphite und -phosphonate, insbesondere Trikresylphosphat, Tris-(aziridinyl)-phosphat (TEPA) und/oder Phosphorsäureester.

Weitere im Sinne der Erfindung geeignete Brandschutz- und Flammschutzmittel, die dem Fachmann bekannt sind, können bei Bedarf ausgewählt werden.

Das Flammschutz- oder Brandschutzmittel kann in der Siegelschicht in gleichmäßiger feiner Verteilung vorliegen und in irgendeiner geeigneten Weise in die Siegelschicht eingebracht worden sein, z.B. während oder nach der Polymerisation als Additiv, pulverförmig dispergiert oder in Lösung, oder als "eingebautes" reaktives Flammschutzmittel während der Polymerisation. Das Flammschutzmittel kann auch innerhalb nur einer Schicht eines beispielsweise coextrudierten Verbundes einer Siegelfolie vorliegen. Eine solche mit einem Flammschutzmittel ausgerüstete ein- oder mehrschichtige Polyolefin-Siegelfolie kann dann mit ein oder mehreren Diffusionssperrschichten, z.B. metallisierten Folien, durch Kaschieren verbunden sein.

Es ist auch möglich mehrere Flammschutzmittel in Kombination zu verwenden, wobei dann die Gesamtmenge vorzugsweise nicht größer als 50 Gew.-%, weiter vorzugsweise nicht größer als 30 Gew.-%, bezogen auf die Polyolefinmasse, in der das Flammschutzmittel verteilt ist, sein sollte, um die Funktionalität der Siegelschicht sicher zu gewährleisten. Die wirksame Menge des Flammschutzmittels, die benötigt wird, um die Brandschutzbestimmungen einzuhalten, kann der Fachmann experimentell bestimmen; die Werte hängen jeweils von der Art des Flammschutzmittels ab. Vorzugsweise ist vorgesehen, dass 0,1 bis 30 Gew.-%, weiter vorzugsweise 0,1 bis 10 Gew.-%, weiter vorzugsweise unter 5 Gew.-%, weiter vorzugsweise 1 bis 3 Gew.-%, bezogen auf die Polyolefinmasse, in der das Flammschutzmittel verteilt ist, in dem Folienverbund enthalten sind.

Alternativ können die Flammschutzmittel oder die Mischungen hieraus auch aus Lösung auf die Oberfläche der Siegelschicht aufgebracht werden. Die Masse der Beschichtung sollte sich in Gewichtsprozent ebenso zur Masse der Siegelschicht selbst verhalten, wie oben angegeben.

Als Diffusionssperrschichten des Hochbarriere-Folienlaminats nach der Erfindung können alle hierfür üblichen Schichten und Schichtkombinationen eingesetzt werden. Geeignete Schichtkombinationen sind unter anderem der DE 100 25 305 A1 oder der DE 100 47 043 zu entnehmen. Bevorzugt sind einseitig oder beidseitig beschichtete Polyester-, Polyamid- oder Polypropylenfolien, die einzeln oder in verschiedensten Kombinationen eingesetzt werden. Die Beschichtung ist im Allgemeinen aufgedampft. Als diffusionshemmende Beschichtungen bzw. Bedampfungen werden in erster Linie Metallisierungen, vorzugsweise mit Aluminium, oder Beschichtungen aus Siliziumoxid ($SiO_x$) oder einem Metalloxid der 2. oder 3. Hauptgruppe verwendet. Die übliche Dicke von metallisierten Polyester- oder Polyamidfolien liegt beispielsweise um ca. 12 $\mu$m und von metallisierten Polypropylenfolien um ca. 18 $\mu$m.

Die Diffusionssperrschichten enthaltenden Folienlaminate oder Hochbarrierefolien umfassen Einzelfolien und/oder coextrudierte Verbundfolien, die durch Kaschierung miteinander verbunden sind. Es können auch bedampfte coextrudierte Schichten im Folienverbund enthalten sein, die selbst wenigstens eine Lage einer Gasdiffusions-Barriereschicht enthalten, vorzugsweise aus Polyvinylalkohol, insbesondere aus Ethylen/Vinylalkohol-Copolymerisat (EVOH).

Die Bedampfungsdicke der Diffusionssperrschichten beträgt vorzugsweise zwischen ca. 30 und 100 nm.

Geeignete Schichtaufbauten sind bei den Beispielen genannt.

In einer weiteren Ausführungsform der Erfindung ist vorgesehen, dass die Siegelschicht oder die Siegelschichten zur noch weiteren Erhöhung der Sperrwirkung des Laminats mit einer zusätzlichen Barriereschicht ausgestattet ist/sind. Als solche zusätzliche Barriereschicht, die in die Siegelschicht integriert ist, kann eine Schicht aus Polyvinylalkohol, insbesondere aus Ethylen/Vinylalkohol-Copolymerisat (EVOH) vorgesehen sein.

Ein möglicher Schichtaufbau für eine solche "Siegelschicht mit Sperrschicht" (PEX) wäre:

## PE/HV/Barriere/HV/PE

Hierbei bedeuten: Barriere = EVOH, HV = Haftvermittler und

PE = Polyethylen-Heißsiegelschicht.

Die Barriereschicht wird im Allgemeinen über einen üblichen und dem Fachmann für diesen Zweck geläufigen Haftvermittler an die Polyolefinschicht, im Beispiel eine Polyethylenschicht, angebunden. Die integrierte Siegel-Sperrschicht (PEX) kann durch Coextrusion der einzelnen Lagen hergestellt werden.

Mit zusätzlicher Sperrschicht in der Siegelschicht ausgerüstete Folienlaminate sind unter den Beispielen angegeben

Durch die Verwendung der Siegelschicht mit Sperrfunktion (PEX) innerhalb des erfindungsgemäßen Folienlaminats kann die Barrierewirkung, das heißt die Gas- und Dampfdichtigkeit, nochmals erhöht werden.

Während bei bekannten Hochbarrierefolien Sauerstoffdiffusionswerte von wenigstens kleiner 0,01 $cm^3/m^2$ d bar (23 °C, 75% relative Feuchte) und Wasserdampfdiffusionswerte von wenigstens kleiner 0,1 $g/m^2$ d (38 °C, 90 % r.F.) erreicht werden, können diese Werte durch Einführung einer Siegelsperrschicht (PEX) nochmals ca. auf die Hälfte gesenkt werden.

Die Erfindung umfasst auch die Verwendung der oben näher beschriebenen Folienlaminate zur Herstellung eines Vakuumisolationspaneels für den Baubereich, sowie ein auf diese Weise hergestelltes Vakuumisolationspaneel, bei dem ein inerter Füllstoff, bzw. ein Dämmstoff mit einer weitestgehend gasdichten Hülle aus einem Folienlaminat nach der Erfindung vollständig umschlossen und der umschlossene Raum weitgehend evakuiert ist. Das Paneel besitzt vorzugsweise die Form einer Platte, die aus dem Dämmstoff geschnitten oder einem pulverförmigen Füllstoff gepresst ist. Die Platte wird so mit dem erfindungsgemäßen Folienlaminat umhüllt, dass das Flammschutzmittel zumindest in oder an der äußeren, vom Dämmstoff entferntest gelegegen Schicht, die eine Heißsiegelschicht ist, ausgebildet ist.

BEISPIELE:

ohne Beschränkung der Allgemeinheit der Erfindung werden folgende, mögliche Schichtaufbauten für Folienlaminate nach der Erfindung angegeben:

Beispiel 1: PM/MPP/MP/PE; einseitig siegelbares Folienlaminat, Schichtdicken (in $\mu$m): 12/18/12/60

Beispiel 2a: PE/PM/MPP/MP/PE; Dicke (in $\mu$m): 60/12/18/12/60 (Schichten ohne Flammenhemmer/Flammschutzmittel) Wasserdampfdurchlässigkeit = WDDU (38 °C, 90 % r.F.) < 0,05 $g/m^2d$
$O_2$-Durchlässigkeit = 02DU (23 °C, 75 % r.F.) < 0,01 $cm^3/(m^2 \cdot d \cdot bar)$

Beispiel 2b: PE/PM/MPP/MP/PE; Dicke (in $\mu$m): 60/12/18/12/60; (PE jeweils mit Flammenhemmer) Wasserdampfdurchlässigkeit = WDDU (38 °C, 90 % r.F.) < 0,05 $g/(m^2d)$, $O_2$-Durchlässigkeit = 02DU: < 0,01$cm^3/(m^2 \cdot d \cdot bar)$ (23 °C, 75 % r.F.)
wobei bedeuten:
PE = Polyethylen-Heißsiegelschicht
PM oder MP = metallisierte Polyester-Folie (die Reihenfolge der Buchstaben zeigt die Lage der Metallisierung im Schichtaufbau an)
MPP = metallisierte Polypropylen-Folie
/ = Schichtfolge, Position der Laminierung oder Kaschierung zwischen den Schichten

Die vorgenannten Schichtaufbauten sind nur beispielhaft und nicht beschränkend zu verstehen, beispielsweise kann, wie in der DE 100 47 043 beschrieben, im Innern des Schichtaufbaus auch noch eine weitere Barriereschicht aus Polyvinylalkohol, Ethylen/Vinylalkohol-Copolymerisat oder Polyethylen vorgesehen sein.

Folienlaminate mit Siegelsperrschichten für eine noch erhöhte Sperrwirkung können beispielsweise den folgenden Schichtaufbau besitzen:
Beispiel 3: PM/MPP/MP/PEX , einseitig siegelbares Folienlaminat; Schichtdicken (in $\mu$m): 12/18/12/50
Beispiel 4: PEX/PPM/MPP/MPP/PEX; Dicke (in $\mu$m): 50/18/18/18/50; (PE mit EVOH)
WDDU (38 °C, 90 % r.F.) < 0,03 $g/(m^2d)$, 02DU: < 0,01 $cm^3/(m^2 \cdot d \cdot bar)$ (23 °C, 75 % r.F.)
PEX = PE/HV/EVOH/HV/PE;
PM oder MP = metallisierte Polyester-Folie (die Reihenfolge der Buchstaben zeigt die Lage der Metallisierung im Schichtaufbau an)
PPM oder MPP = metallisierte Polypropylen-Folie (die Reihenfolge der Buchstaben zeigt die Lage der Metallisierung im Schichtaufbau an)
/ = Schichtfolge, Position der Laminierung oder Kaschierung zwischen den Schichten

Prüfung des Brandverhaltens

Ein mit dem erfindungsgemäßen Folienlaminat gemäß Beispiel 2b umschlossenes, plattenförmiges Vakuumisolationspaneel mit pyrogener Kieselsäure als Füllstoff (Paneeldicke: ca. 20 mm), evakuiert, wurde nach DIN 4102-1, Mai 1998, Baustoffklasse B2, Abschnitt 6.2.5 mit Kantenbeflammung nach Abschnitt 6.2.5.2 und mit Beflammung der Probenvorderkante nach Abschnitt 6.2.5.5 geprüft. Dabei wurden in zwei verschiedenen Prüfgängen die massiven Kanten der Vakuum-Wärmedämmplatte (ohne Berücksichtigung der Laschen der Schweißnähte) sowie die verschiedenen, fixierten Schweißnähte der Vakuum-Wärmedämmplatte beflammt. Nach Abschluss der Prüfungen und Auswertungen der Ergebnisse kam das prüfende Institut zu der Beurteilung, dass der Dämmstoff in Verbindung mit den Prüferzeugnissen H.2-054/04 und H.4-055/04 als DIN 4102-B2 normal entflammbar gilt. Das geprüfte Wärmedämmprodukt erfüllt die Anforderungen an die Baustoffklasse DIN 4102-B2.

Vergleichsversuch: ein zu Testzwecken mit PE-Folie (entsprechend DIN 4102, UL 94 und LOI (ASTMD 2863)) mit Flammschutzmittel umschlossenes VakuumisolationsPaneel erfüllt die Anforderungen nicht.

## Patentansprüche

1. Folienlaminat mit wenigstens einer Diffusionssperrschicht für die Herstellung eines im Baubereich einsetzbaren Vakuumisolationspaneels, **dadurch gekennzeichnet, dass** das Folienlaminat an wenigstens einer Oberfläche eine ein- oder mehrschichtige Polyolefin-Siegelfolie besitzt, die innerhalb einer außenliegenden Einzelfolie oder innerhalb eines coextrudierten, wenigstens außenliegend eine Polyolefinschicht enthaltenden Verbundes mit einer wirksamen Menge eines Flammschutzmittels oder einer Mischung aus Flammschutzmitteln versehen ist.

2. Folienlaminat nach Anspruch 1, **dadurch gekennzeichnet, dass** die einseitig oder beidseitig an der Oberfläche des Laminats vorhandene Siegelschicht eine Polyethylen-Heißsiegelschicht ist.

3. Folienlaminat nach Anspruch 1 oder 2, **dadurch gekennzeichnet, dass** als Flammschutzmittel Mittel aus der folgenden Gruppe einzeln oder in Kombination eingesetzt werden: Antimontrioxid, Borate, insbesondere Alkaliborate, Zinkborate, Borax-Dekahydrat, Borax-Pentahydrat und/oder Melaminborat, Ammoniumphosphate, Alkalisilikate, Aluminiumoxidhydrate, Aluminiumtrihydrat, halogenierte oragnische Verbindungen, insbesondere Chlorparaffine, Hexabrombenzol, polybromierte Diphenylether (PBDE), polybromierte Biphenyle (PBB), Tetrabrombisphenol-A (TBBA), tetrabromphthalsäureanhydrid, Dibromneopentylglykol, Tris-(2,3-dibrompropyl)-phosphat (TRIS-BP) und/oder Tris-(2-brom-4-methyl-phenyl)-phosphat, Organophosphate, -phosphite und -phosphonate, insbesondere Trikresylphosphat, Tris-(aziridinyl)-phosphat (TEPA) und/oder Phosphorsäureester.

4. Folienlaminat nach einem der Ansprüche 1 bis 3, **dadurch gekennzeichnet, dass** es als eine wirksame Menge des Flammschutzmittels 0,1 bis 30 Gew.-% bezogen auf die Polyolefinmasse, in der das Flammschutzmittel verteilt ist, enthält., vorzugsweise 0,1 bis 10 Gew.-%, weiter vorzugsweise 1 bis 3 Gew.-%.

5. Folienlaminat nach einem der Ansprüche 1 bis 4, **dadurch gekennzeichnet, dass** das Laminat als Diffusionssperrschicht wenigstens eine metallisierte oder mit SiO$_x$ oder einem Metalloxid der 2. oder 3. Hauptgruppe bedampfte Polyesterfolie, Polyamidfolie und/oder Polypropylenfolie enthält.

6. Folienlaminat nach einem der Ansprüche 1 bis 5, **dadurch gekennzeichnet, dass** es aus Einzelschichten und/oder coextrudierten Verbundschichten besteht, die durch Kaschieren verbunden sind.

7. Folienlaminat nach einem der Ansprüche 1 bis 6, **dadurch gekennzeichnet, dass** die Diffusionssperrschichten ein- oder beidseitig bedampfte Schichten sind.

8. Folienlaminat nach einem der Ansprüche 1 bis 7, **dadurch gekennzeichnet, dass** wenigstens eine der Diffusionssperrschichten eine bedampfte coextrudierte Schicht ist, die wenigstens eine Lage einer Gasdiffusions-Barriere-schicht enthält, vorzugsweise aus Polyvinylalkohol, insbesondere EthylenNinylalkohol-Copolymerisat (EVOH).

9. Folienlaminat nach einem der Ansprüche 1 bis 8, **dadurch gekennzeichnet, dass** wenigstens eine der außenliegenden polyolefinischen Siegelschichten eine coextrudierte Gasdiffusions-Barriereschicht enthält, vorzugsweise aus Polyvinylalkohol, insbesondere EthylenNinylalkohol-Copolymerisat (EVOH).

10. Folienlaminat nach einem der Ansprüche 1 bis 9, **dadurch gekennzeichnet, dass** die Bedampfungsdicke der metallisierten Diffusionssperrschichten 30 bis 100 nm beträgt.

11. Verwendung des Folienlaminats nach einem der Ansprüche 1 bis 10 zur Herstellung eines Vakuumisolationspaneels für den Baubereich.

12. Vakuumisolationspaneel für den Baubereich, bei dem ein inerter Füllstoff mit einer weitestgehend gasdichten Hülle vollständig umschlossen und der umschlossene Raum weitgehend evakuiert ist, **dadurch gekennzeichnet, dass** die gasdichte Hülle ein Folienlaminat nach einem der Ansprüche 1 bis 10 ist.

## Claims

1. A film laminate having at least one diffusion barrier layer for the production of a vacuum insulation panel applicable in the construction sector, **characterized in that** the film laminate has on at least one surface, a one-layer or multi-layer polyolefin sealing film, provided with an effective amount of a flame retardant or a mixture of flame retardants within an outward facing single film or within a coextruded composite containing at least an outward facing polyolefin layer.

2. The film laminate according to claim 1, **characterized in that** the sealing layer present on one or both sides of the surface of the laminate is a polyethylene heat-sealing layer.

3. The film laminate according to claim 1 or claim 2, **characterized in that** as flame retardant, agents from the following group are used individually or in combination: antimony trioxide, borates, in particular alkali borates, zinc borates, borax decahydrate, borax pentahydrate, and/or melamine borate, ammonium phosphates, alkali silicates, aluminum oxyhydrates, aluminum trihydrate, halogenated organic compounds, in particular chloroparaffins, hexabromobenzene, polybrominated diphenyl ethers (PBDE), polybrominated biphenyls (PBB), tetrabromobisphenol A (TBBA), tetrabromophthalic acid anhydride, dibromoneopentyl glycol, tris-(2,3-dibromopropyl) phosphate (TRIS-BP) and/or tris-(2-bromo-4-methyl-phenyl) phosphate, organophosphates, -phosphites, and -phosphonates, in particular tricresyl phosphate, tris-(aziridinyl) phosphate (TEPA), and/or phosphoric acid esters.

4. The film laminate according to any one of claims 1 to 3, **characterized in that** it contains as an effective amount of the flame retardant 0.1 to 30% by weight, based on the polyolefin mass, in which the flame retardant is distributed, preferably 0.1 to 10% by weight, more preferably 1 to 3% by weight.

5. The film laminate according to any one of claims 1 to 4, **characterized in that** the laminate contains as diffusion barrier layer at least one metallized or with $SiO_x$ or a metal oxide of the $2^{nd}$ or $3^{rd}$ main group vaporized polyester film, polyamide film, and/or polypropylene film.

6. The film laminate according to any one of claims 1 to 5, **characterized in that** it consists of individual layers and/or coextruded composite layers bonded by lamination.

7. The film laminate according to any one of claims 1 to 6, **characterized in that** the diffusion barrier layers are one-sidedly or double-sidedly vaporized layers.

8. The film laminate according to any one of claims 1 to 7, **characterized in that** at least one of the diffusion barrier layers is a vaporized coextruded layer containing at least one ply of a gas diffusion barrier layer, preferably made of polyvinyl alcohol, in particular ethylene/vinyl alcohol copolymer (EVOH).

9. The film laminate according to any one of claims 1 to 8, **characterized in that** at least one of the external polyolefinic sealing layers contains a coextruded gas diffusion barrier layer, preferably made of polyvinyl alcohol, in particular ethylene/vinyl alcohol copolymer (EVOH).

10. The film laminate according to any one of claims 1 to 9, **characterized in that** the vaporization thickness of the metallized diffusion barrier layers is 30 to 100 nm.

11. The use of the film laminate according to any one of claims 1 to 10 for the production of vacuum insulation panels for the construction sector.

12. A vacuum insulation panel for the construction sector, wherein an inert filler material is completely enclosed by an essentially gas-tight shell and the enclosed space is largely evacuated, **characterized in that** the gas-tight shell is a film laminate according to any one of claims 1 to 10.

## Revendications

1. Feuille composite ayant au moins une couche barrière de diffusion pour la préparation d'un panneau d'isolation sous vide pouvant être utilisé dans le domaine du bâtiment, **caractérisée en ce que** la feuille composite comprend au moins une couche scellée de poly(oléfine) monocouche ou multicouche au niveau d'au moins une surface, laquelle se trouve dans une feuille unique externe ou dans un assemblage contenant une couche de poly(oléfine) co-extrudée, au moins externe avec une quantité efficace d'un agent ignifuge ou d'un mélange d'agents ignifuges.

2. Feuille composite selon la revendication 1, **caractérisée en ce que** la couche scellée d'un côté ou des deux côtés présente au niveau de la surface du composite est une couche thermoscellée en poly(éthylène).

3. Feuille composite selon la revendication 1 ou 2, **caractérisée en ce que** l'on utilise, en tant qu'agent ignifuge, un agent ignifuge seul ou en combinaison, choisi dans le groupe suivant : le trioxyde d'antimoine, les borates, en particulier les borates alcalins, les borates de zinc, le borax décahydraté, le borax pentahydraté et/ou le borate de mélamine, les phosphates d'ammonium, les silicates alcalins, les oxydes d'aluminium hydratés, l'aluminium trihydraté, les composés organiques halogénés, en particulier la chloroparaffine, l'hexabromobenzène, le diphényléther polybromé (PBDE), le biphényle polybromé (PBB), le tétrabromobisphénol A (TBBA), l'anhydride d'acide tétrabromophtalique, le dibromonéopentyl glycol, le phosphate de tris-(2,3-dibromopropyle) (TRIS-BP) et/ou le phosphate de tris-(2-bromo-4-méthyl-phényle), les organophosphates, les organophosphites et les organophosphonates, en particulier le phosphate de tricrésyle, le phosphate de tris-(aziridinyle) (TEPA) et/ou un ester d'acide phosphorique.

4. Feuille composite selon l'une quelconque des revendications 1 à 3, **caractérisée en ce qu'**elle contient, en tant que quantité efficace de l'agent ignifuge, de 0,1 à 30 % en poids rapporté à la masse de polyoléfine, dans laquelle l'agent ignifuge est réparti, de préférence de 0,1 à 10 % en poids, de manière davantage préférée de 1 à 3 % en poids.

5. Feuille composite selon l'une quelconque des revendications 1 à 4, **caractérisée en ce que** le composite contient, en tant que couche barrière de dispersion, au moins une feuille en poly(ester), une feuille en poly(amide) et/ou une feuille en poly(propylène) métallisée ou vaporisée avec du $SiO_2$ ou un oxyde de métal des groupes principaux 2 ou 3.

6. Feuille composite selon l'une quelconque des revendications 1 à 5, **caractérisée en ce qu'**elle est constituée de couches uniques et/ou de couches liées co-extrudées liées ensemble par stratification.

7. Feuille composite selon l'une quelconque des revendications 1 à 6, **caractérisée en ce que** les couches barrières de diffusion sont des couches vaporisées d'un côté ou des deux côtés.

8. Feuille composite selon l'une quelconque des revendications 1 à 7, **caractérisée en ce qu'**au moins une des couches barrières de dispersion est une couche co-extrudée vaporisée, laquelle contient au moins une couche d'une couche barrière de diffusion des gaz, de préférence constituée de poly(alcool vinylique), en particulier un copolymérisat d'éthylène/alcool vinylique (EVOH).

9. Feuille composite selon l'une quelconque des revendications 1 à 8, **caractérisée en ce qu'**au moins une des couches scellées polyoléfiniques externes contient une couche barrière de diffusion des gaz, constituée de préférence de poly(alcool vinylique), en particulier d'un copolymérisat d'éthylène/alcool vinylique (EVOH).

10. Feuille composite selon l'une quelconque des revendications 1 à 9, **caractérisée en ce que** l'épaisseur de la couche de vaporisation des couches barrières de diffusion métallisées est de 30 à 100 nm.

11. Utilisation d'une feuille composite selon l'une quelconque des revendications 1 à 10, pour la fabrication d'un panneau d'isolation sous vide pour le domaine du bâtiment.

12. Panneau d'isolation sous vide pour le domaine du bâtiment, dans lequel une matière de charge inerte est en grande partie entourée d'une enveloppe imperméable aux gaz et est en grande partie évacuée de la pièce fermée, **caractérisé en ce que** l'enveloppe imperméable aux gaz est une feuille composite selon l'une quelconque des revendications 1 à 10.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10025305 A1
- DE 10025321 A1
- DE 10047043 A1
- US 4592941 A
- DE 10047043